# EUROPÄISCHE PATENTSCHRIFT

(11) **EP 1 640 232 B1**
(45) Veröffentlichungstag und Bekanntmachung des Hinweises auf die Patenterteilung: **13.06.2007**
(21) Anmeldenummer: 05020634.1
(22) Anmeldetag: 22.09.2005
(51) Int. Cl.: B60T 13/26, B60T 17/02, B60T 17/22, B60T 17/18, B60T 13/68, B60T 17/04

(54) **Druckluft-Versorgungseinrichtung für eine Druckluftanlage in einem Nutzfahrzeug**
Compressed air supply device for a pneumatic system in a commercial vehicle
Dispositif de distribution d'air comprimé d'un système à air comprimé d'un véhicule commerciale

(30) Priorität: 24.09.2004 DE 102004046352
(43) Veröffentlichungstag der Anmeldung: 29.03.2006
(73) Patentinhaber: DaimlerChrysler AG, 70327 Stuttgart (DE)
(72) Erfinder: Schmitt, Heinz, 69483 Wald-Michelbach (DE)

(56) Entgegenhaltungen:
- EP-A- 1 527 974
- DE-A1- 3 533 893

## Beschreibung

Die Erfindung betrifft eine Druckluftversorgungseinrichtung für eine Druckluftanlage in einem Nutzfahrzeug nach dem Oberbegriff des Patentanspruchs 1.

In Nutzfahrzeugen, insbesondere in Lastkraftwagen und Omnibussen, sind diverse Druckluftanlagen installiert. Einen Schwerpunkt bildet die Bremsenanlage, die in der Regel über Druckluft angesteuert wird. Weitere Druckluftkreisläufe in derartigen Nutzfahrzeugen finden sich beispielsweise für die Luftfederung des Fahrzeugs, für das Öffnen und Schließen von Türen, beispielsweise bei Omnibussen, oder als Federung von Fahrersitzen. Diese einzelnen Druckluftkreisläufe versorgen damit die unterschiedlichsten Verbrauchereinheiten für die Druckluft, welche in der Regel von zumindest einem Verdichter erzeugt wird und gegebenenfalls in zumindest einem Druckspeicher gespeichert wird, um die Druckluft bedarfsgerecht zur Verfügung stellen zu können. DE 3 533 893 A1 beschreibt eine gattungsgemäße Einrichtung.

Allen Druckluftanlagen in Nutzfahrzeugen ist gemeinsam, dass die Druckluft für ein einwandfreies Funktionieren der Druckluftkreisläufe gereinigt und entwässert werden muss.

Die Entwässerung erfolgt durch hinlänglich bekannte Lufttrockner, während Schmutzpartikel in der Luft, wie beispielsweise Öl oder Staub, mittels eines sogenannten Zyklonabscheiders herausgefiltert werden, welcher zusätzlich eine vorab durchgeführte Entwässerung der Luft durchführen kann.

Systemimmanent ist es jedoch nicht möglich, die Luft absolut rein zu halten, so dass stets Partikel im Kreislauf vorhanden sind, welche über eine gewisse Zeitspanne zwangsläufig zu einer Verkokung beziehungsweise Verstopfung der Förderleitungen in den Druckluftkreislaufsystemen führen. Gegebenenfalls wird auch ein in der Förderleitung vorhandener Zyklonabscheider dadurch in seiner Wirkungsweise erheblich beeinträchtigt.

Ungünstigenfalls führt diese Verkokung beziehungsweise Verstopfung der Förderleitung beziehungsweise einzelner, in dieser angeordneter Aggregate zu einem kritischen Druck- und Temperaturanstieg der Druckluft.

Bevor eine vollständige Verstopfung beziehungsweise ein kompletter Verschluss des gesamten Systems droht, ist im Stand der Technik vorgeschlagen worden, ein Überdruckventil in dem Kreislaufsystem vorzusehen, welches die Förderleitung mit der Umgebung verbindet, um die unter Überdruck stehende heiße Druckluft ablassen zu können, so dass eine Schädigung des Kreislaufsystems verhindert werden kann.

Dies ist jedoch mit dem Nachteil behaftet, dass extrem heiße Luft in den Motorraum austritt, die zu weiteren Beschädigungen an umgebenden Aggregaten führen kann. Des Weiteren wird infolge dieses Prozesses keine Warnung an den Fahrer des Fahrzeugs gegeben, so dass dieser das Fahrzeug anhalten könnte. Das Fahrzeug bleibt letztendlich von selbst stehen, wenn die Leitung vollständig verschlossen ist und das jeweilige Druckkreislaufsystem daher nicht mehr ausreichend Druckluft zu der Verbrauchereinheit leiten kann. Bei Systemen, die für das Funktionieren des Fahrzeugs unersetzlich sind, wie beispielsweise dem Bremssystem, führt eine zu starke Verkokung schließlich dazu, dass das Fahrzeug abgeschleppt werden muss.

Ausgehend davon ist es die Aufgabe der vorliegenden Erfindung, eine Druckluft-Versorgungseinrichtung für eine Druckluftanlage in einem Nutzfahrzeug bereitzustellen, welche ein Liegenbleiben eines Nutzfahrzeugs bei einer Verkokung beziehungsweise Verstopfung in dem Druckkreislaufsystem verhindert und die Sicherheit erheblich erhöht.

Gelöst wird diese Aufgabe mit einer Druckluft-Versorgungseinrichtung mit den Merkmalen des Patentanspruchs 1.

Demzufolge besteht der Kern der Erfindung darin, dass zusätzlich zu einer Förderleitung, welche von einem Verdichter zu einem Lufttrockner und anschließend über zumindest einen Schutzventilkreislauf zu zumindest einer Verbrauchereinheit für die Druckluft führt, durch eine zweite, quasi parallele Förderleitung in der Art eines "Bypass" überbrückt wird, wenn die ursprüngliche Haupt-Förderleitung aufgrund Verstopfung ihre Funktion nicht mehr erfüllen kann.

Gemäß der Erfindung zweigt die zweite, redundant wirkende Förderleitung unmittelbar nach dem Verdichter von der ersten Förderleitung ab.

Um zu bestimmen, wann die zweite Förderleitung anstatt der ersten Förderleitung die von dem Verdichter stammende Druckluft zu dem Lufttrockner und im Anschluss daran zu einer Verbrauchereinheit leitet, wird ein vorbestimmter Schwellenwert, der sogenannte Überströmdruck, verwendet, ab welchem eine funktionssichernde Druckluftführung durch die erste Förderleitung aufgrund der Verkokung beziehungsweise Verstopfung nicht mehr gewährleistet ist.

Zu diesem Zweck ist in der zweiten Förderleitung gemäß der Erfindung ein Überströmventil angeordnet, welches bei Erreichen beziehungsweise Überschreiten des Überströmdrucks in der ersten Förderleitung die zweite Förderleitung öffnet.

Auf diese Art und Weise wird mittels der zweiten Förderleitung sichergestellt, dass das Fahrzeug nicht aufgrund nicht ausreichender Druckluftversorgung stehen bleibt, sondern zumindest über einen gewissen Zeitabschnitt über den redundanten, zweiten Förderkreislauf Aggregate mit Druckluft versorgt werden, um die Funktionssicherheit des Fahrzeugs zu gewährleisten.

Um von der Seite des Lufttrockners beziehungsweise einer daran anschließenden Verbrauchereinheit keinen Druckluftrückstoß aus der ersten Förderleitung in die zweite Förderleitung zu ermöglichen, ist am Ende der zweiten Förderleitung vor dem Lufttrockner ein Rückschlagventil angeordnet.

In einer Ausführungsform gemäß der Erfindung befindet sich zwischen dem verdichterseitigen Überstromventil und dem lufttrocknerseitigen Rückschlagventil in der zweiten Förderleitung ein Druckschalter, welcher mit einer Warneinrichtung zusammenwirkt.

Diese Warneinrichtung informiert den Fahrer, dass das Druckluftsystem aufgrund von Verstopfung dann hilfsweise über den redundanten zweiten Förderkreislauf arbeitet, so dass dieser unmittelbar eine Werkstatt aufsuchen kann. Wäre dieser zweite Förderkreislauf, wie im Stand der Technik, nicht vorhanden, würde der Fahrer erst über ein Versagen der ersten Förderleitung informiert werden, wenn das Fahrzeug stehen bleibt. Die Warneinrichtung selbst kann optisch und/oder akustisch dem Fahrer diese Information mitteilen.

In der ersten Förderleitung befinden sich diverse Aggregate angeordnet, beispielsweise der bereits genannte Zyklonabscheider zum Abscheiden von Schmutzpartikeln und Öl aus der Druckluft.

Für ein einwandfreies Funktionieren diverser Verbrauchereinheiten ist auch eine bestimmte Temperatur der Druckluft Voraussetzung, so dass sowohl in dem ersten Förderkreislauf als auch in dem zweiten Förderkreislauf nach der Abzweigung der zweiten Förderleitung von der ersten Förderleitung jeweils ein Druckluftkühler vorgesehen ist.

Je nach Ausgestaltung der Druckluft-Versorgungseinrichtung und je nach Ausgestaltung und Zweck der von dieser mit Druckluft zu versorgenden Verbrauchereinheit bestimmt sich der vorbestimmte Schwellenwert beziehungsweise Überströmdruck, bei welchem die zweite Förderleitung mittels des Überströmendventils geöffnet wird, in Abhängigkeit eines Abschaltdruckes eines Druckreglers, der für die entsprechende Verbrauchereinheit zuständig ist und in der Regel dieser vorgeschaltet ist.

Es wird deutlich, dass auf einfache Art und Weise durch einen zweiten redundanten Förderkreislauf in Druckluftanlagen, unabhängig von deren Ausgestaltung, verkokte oder verstopfte Druckleitungen oder Zyklonabscheider umgangen werden können, so dass das Druckluftsystem noch so lange betriebsbereit aufrechterhalten werden kann, bis eine Werkstatt aufgesucht wird. Dadurch wird die Funktionssicherheit des Gesamtsystems einer solchen Druckluft-Versorgungseinrichtung in einem Nutzfahrzeug erheblich erhöht.

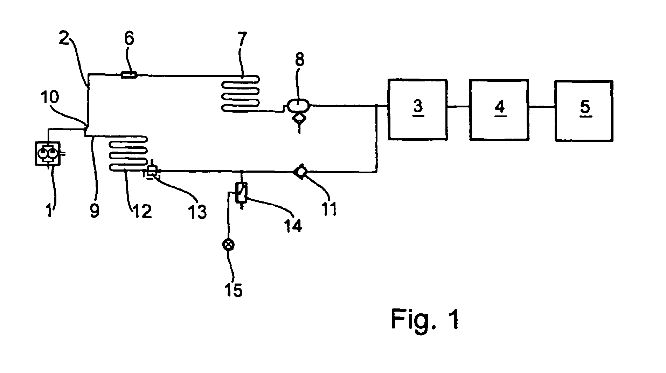

In der einzigen Figur 1 ist schematisch ein Ausführungsbeispiel einer Druckluft-Versorgungseinrichtung gemäß der Erfindung mit einem zweiten Förderkreislauf gezeigt.

Die Figur 1 zeigt schematisch einen Versorgungsschaltplan für die erfindungsgemäße Druckluft-Versorgungseinrichtung.

Unabhängig von dem vorgesehenen Verwendungszweck beziehungsweise der zumindest einen, von der Druckluft-Versorgungseinrichtung mit Druckluft zu versorgenden Verbrauchereinheit, ist der prinzipielle Aufbau des erfindungsgemäßen Systems gleichbleibend.

Dieses besteht aus einem Verdichter 1, welcher verdichtete Druckluft aus der Umgebungsluft einer ersten Förderleitung 2 zur Verfügung stellt.

Die Förderleitung 2 führt von dem Verdichter 1 zu einem hier schematisch dargestellten Lufttrockner 3 zur Entwässerung der Druckluft. Im Anschluss an den Lufttrockner 3 schließt sich zumindest ein Schutzventilkreislauf 4 und im Anschluss daran zumindest eine Verbrauchereinheit 5, beispielsweise ein Bremssystem, an, welches mit Druckluft von dem Verdichter 1 versorgt werden soll.

Im Verlauf der ersten Förderleitung 2 ist ein Schalldämpfer 6 vorgesehen. Im Anschluss daran befindet sich ein Druckluftkühler 7 in der Form einer Kühlschlange.

Zum Abscheiden von Öl und anderen Schmutzpartikeln aus der nun unter Druck stehenden Umgebungsluft schließt sich ein Zyklonabscheider 8 an, bevor die erste Förderleitung 2 den Lufttrockner 3 mit Druckluft speist.

Unmittelbar nach dem Verdichter 1 zweigt von der ersten Förderleitung 2 eine zweite Förderleitung 9 ab. Dies geschieht mittels einer einfachen Y-förmigen Abzweigung 10.

Die zweite Förderleitung 9 führt ebenfalls zu dem Lufttrockner 3.

Am Ende der zweiten Förderleitung 9 ist ein Rückschlagventil 11 vorgesehen, so dass keine Druckluft aus der ersten Förderleitung 2 im normalen Betriebszustand durch die zweite Förderleitung 9 zurückströmen kann.

Am verdichterseitigen Ende der zweiten Förderleitung 9 unmittelbar nach der Abzweigung 10 ist ebenfalls ein Druckluftkühler 12 vorgesehen. Im unmittelbaren Anschluss daran befindet sich in der zweiten Förderleitung 9 ein Überströmventil 13 angeordnet.

Das Überströmventil 13 reagiert auf Überdruck, der in der ersten Förderleitung 2 vorherrscht, beispielsweise wenn diese stark verkokt oder verstopft ist. Ab einem vorab eingestellten Schwellenwert, beziehungsweise Überströmdruck, öffnet das Überströmventil 13, so dass die von dem Verdichter 1 stammende Druckluft ausschließlich über die zweite Förderleitung 9 zu dem Lufttrockner 3 geleitet wird.

Ist dies der Fall, so wird mittels eines zwischen dem Rückschlagventil 11 und dem Überströmventil 13 angeordneten Druckschalters 14 eine mit dem Druckschalter 14 in Verbindung stehende, beispielsweise optische, Warneinrichtung 15 aktiviert, so dass der Fahrer darüber informiert wird, dass das Druckluft-Versorgungssystem gerade über einen zweiten redundanten Druckluftkreislauf, der durch die zweite Förderleitung 9 gebildet wird, arbeitet und somit die Information darüber erhält, dass die erste Förderleitung 2 nicht mehr funktionsfähig ist.

Aufgrund des durch die zweite Förderleitung 9 gebildeten "Bypass" lässt sich das Druckluft-Versorgungssystem aufrechterhalten, und dadurch das Fahrzeug bis zu der nunmehr anstehenden Reparatur des durch die erste Förderleitung 2 gebildeten Druckluftkreislaufes in seiner Funktion aufrechterhalten.

## Patentansprüche

1. Druckluft-Versorgungseinrichtung für eine Druckluftanlage in einem Nutzfahrzeug mit einem Druckluft erzeugenden Verdichter (1) und einer Förderleitung (2) von dem Verdichter (1) zu einem Lufttrockner (3) und anschließend über zumindest einen Schutzventilkreislauf (4) zu zumindest einer Verbrauchereinheit (5) für die Druckluft, **gekennzeichnet durch** eine zweite Förderleitung (9), welche von der ersten Förderleitung (2) unmittelbar nach dem Verdichter (1) zu dem Lufttrockner (3) abzweigt und von einem in der zweiten Förderleitung (9) angeordneten Überströmventil (13) geöffnet wird, wenn der Druck in der ersten Förderleitung (2) einen vorbestimmten Schwellenwert (Überströmdruck) übersteigt.

2. Druckluft-Versorgungseinrichtung nach Anspruch 1, bei welcher in der zweiten Förderleitung (9) zwischen dem Überströmventil (13) und dem Lufttrockner (3) ein Rückschlagventil (11) angeordnet ist.

3. Druckluft-Versorgungseinrichtung nach Anspruch 2, bei welcher zwischen dem Überströmventil (13) und dem Rückschlagventil (11) ein Druckschalter (14) angeordnet ist, welcher mit einer optischen und/oder akustischen Warneinrichtung (15) für den Fahrer des Nutzfahrzeugs zusammenwirkt.

4. Druckluft-Versorgungseinrichtung nach einem der vorhergehenden Ansprüche, bei welcher in der ersten Förderleitung (2) und in der zweiten Förderleitung (9) nach einer Abzweigung (10) nach dem Verdichter (1) jeweils ein Druckluftkühler (7, 12) vorgesehen ist.

5. Druckluft-Versorgungseinrichtung nach einem der vorhergehenden Ansprüche, bei welcher der Überströmdruck des Überströmventils (13) abhängig von einem Abschaltdruck eines Druckreglers für die zumindest eine verbrauchereinheit (5) ist.

## Claims

1. Compressed air supply device for a pneumatic system in a commercial vehicle, with a compressor (1) generating compressed air and a discharge line (2) from the compressor (1) to an air drier (3) and from there via at least one protective valve circuit (4) to at least one compressed air user (5), **characterised by** a second discharge line (9), which branches off the first discharge line (2) immediately downstream of the compressor (1) towards the air drier (3) and is opened by a relief valve (13) located in the second discharge line (9) if the pressure in the first discharge line (2) exceeds a predetermined threshold value (relief pressure).

2. Compressed air supply device according to claim 1, wherein a check valve (11) is located in the second discharge line (9) between the relief valve (13) and the air drier (3).

3. Compressed air supply device according to claim 2, wherein a pressure switch (14) is located between the relief valve (13) and the check valve (11) to act together with an optical and/or acoustic warning device (15) for the driver of the commercial vehicle.

4. Compressed air supply device according to any of the preceding claims, wherein an air cooler (7, 12) is provided in the first discharge line (2) and in the second discharge line (9) downstream of a branch (10) downstream of the compressor (1).

5. Compressed air supply device according to any of the preceding claims, wherein the relief pressure of the relief valve (13) is dependent on a cut-off pressure of a pressure controller for the air user (5).

## Revendications

1. Dispositif d'alimentation en air comprimé pour une installation à air comprimé sur un véhicule utilitaire comprenant un compresseur (1) générant de l'air comprimé et une conduite de transport (2) allant du compresseur (1) à un déshydrateur d'air (3) et ensuite par au moins un circuit à vanne de protection (4) à au mois une unité utilisatrice (5) pour l'air comprimé, **caractérisé par** une seconde conduite de transport (9), laquelle dévie de la première conduite de transport (2) directement vers le compresseur (1) au déshydrateur d'air (3) et est ouverte par une vanne de trop-plein (13) disposée dans la seconde conduite de transport (9) lorsque la pression dans la première conduite de transport (2) dépasse une valeur seuil prédéfinie (pression de trop-plein).

2. Dispositif d'alimentation en air comprimé selon la revendication 1, sur lequel une vanne antiretour (11) est disposée dans la seconde conduite de transport (9) entre la vanne de trop-plein (13) et le déshydrateur d'air (3).

3. Dispositif d'alimentation en air comprimé selon la revendication 2, sur lequel un interrupteur à pression (14) est disposé entre la vanne de trop-plein (13) et la vanne antiretour (11), lequel interrupteur coopère avec un dispositif d'avertissement (15) optique et/ou acoustique pour le conducteur du véhicule utilitaire.

4. Dispositif d'alimentation en air comprimé selon l'une quelconque des revendications précédentes, sur lequel à chaque fois un refroidisseur à air comprimé (7, 12) est prévu dans la première conduite de transport (2) et dans la seconde conduite de transport (9) après une dérivation (10) vers le compresseur (1).

5. Dispositif d'alimentation en air comprimé selon l'une quelconque des revendications précédentes, sur lequel la pression de trop-plein de la vanne de trop-plein (13) est dépendante d'une pression de déconnexion d'un régulateur de pression pour la au moins une unité utilisatrice (5).
